Europäisches Patentamt

European Patent Office

Office européen des brevets

(11) Veröffentlichungsnummer: **0 217 039**
**B1**

# EUROPÄISCHE PATENTSCHRIFT

(45) Veröffentlichungstag der Patentschrift:
09.05.90

(51) Int. Cl.⁵: **F16J 15/18, F16J 15/56**

(21) Anmeldenummer: 86110265.5

(22) Anmeldetag: 25.07.86

(54) **Abdichtungseinrichtung an einer Kolben-Zylinderanordnung, insbesondere zur Abdichtung des Ventilkegels an Ventilen mit Druckausgleich.**

(30) Priorität: 25.09.85 DE 3534135

(43) Veröffentlichungstag der Anmeldung:
08.04.87 Patentblatt 87/15

(45) Bekanntmachung des Hinweises auf die Patenterteilung:
09.05.90 Patentblatt 90/19

(84) Benannte Vertragsstaaten:
DE FR GB IT

(56) Entgegenhaltungen:
DE-A- 3 003 157
DE-C- 925 559
US-A- 2 358 719
US-A- 2 392 123
US-A- 2 839 265
US-A- 3 039 780

(73) Patentinhaber: Masoneilan HP + HP Gesellschaft mit beschränkter Haftung, Kleinkollenburgstrasse 78-80, D-4156 Willich 2-Anrath(DE)

(72) Erfinder: Lindackers, Rudolf, Grünewaldstrasse 2, D-4060 Viersen 11-Dülken(DE)
Erfinder: v.d. Weydt, Willi, Kuhstrasse 12, D-4154 Tönisvorst-Vorst(DE)

(74) Vertreter: Feder, Heinz, Dr. et al, Dominikanerstrasse 37, D-4000 Düsseldorf 11(DE)

## Beschreibung

Die Erfindung betrifft eine Abdichtungseinrichtung an einer Kolben-Zylinderanordnung zur Abdichtung des hinter dem Kolben liegenden Zylinderinnenraumes gegen einen Ein- bzw. Auslaß, mit einer im Bereich des hinteren Endes des Kolbens in dessen Mantelfläche angeordneten Ringdichtung aus elastischem Material, die in einer sich zur hinteren Stirnfläche des Kolbens hin öffnenden Ringnut der Mantelfläche angeordnet ist, wobei über der Ringdichtung in der Ringnut ein die hintere Stirnfläche des Kolbens überragender Preßring verschiebbar geführt ist.

Unter dem "hinteren Ende" des Kolbens soll im Sinne der Erfindung das Ende verstanden werden, das mit der Kolbenstange verbunden ist.

Eine Abdichtungseinrichtung mit den eingangs erwähnten Merkmalen ist in dem Dokument US-A 2 392 123 beschrieben. Eine ähnliche Einrichtung ist in dem Dokument US-A 2 358 719 beschrieben.

Die bekannten Abdichtungseinrichtungen dieser Art haben den Nachteil, daß die in der Mantelfläche des Kolbens angeordnete Ringdichtung, damit eine zuverlässige Abdichtung erreicht wird, unter einem erheblichen Preßdruck stehen muß, so daß Reibungskräfte entstehen, die einerseits die Kolbenbewegung behindern und andererseits zu erheblichem Verschleiß der Bauteile führen können.

Die Erfindung geht von der Erkenntnis aus, daß in vielen Fällen eine zuverlässige Abdichtung des hinter dem Kolben liegenden Zylinderinnenraumes gegenüber dem in der Mantelfläche angeordneten Ein- bzw. Auslaß erst in der Endstellung des Kolbens notwendig ist.

Die der Erfindung zugrunde liegende Aufgabe bestand darin, eine Abdichtungseinrichtung der eingangs erwähnten Bauart so auszubilden, daß die endgültige Anpressung der Ringdichtung an die Zylinderinnenwand erst in der Endstellung des Kolbens erfolgt. Auf diese Weise soll erreicht werden, daß in der Endstellung des Kolbens eine zuverlässige Abdichtung erreicht wird, während in der Ausgangsstellung und den Zwischenstellungen des Kolbens möglichst keine Behinderung der Kolbenbewegung durch Reibung an der Ringdichtung erfolgen soll.

Die Lösung dieser Aufgabe erfolgt erfindungsgemäß dadurch, daß an der verschiebbar im Kolben geführten Kolbenstange in vorgegebenem Abstand hinter der hinteren Stirnfläche ein Anschlag fest angeordnet ist, wobei zwischen dem Preßring und dem Anschlag ein Federelement angeordnet ist, das kraftschlüssig mit dem Preßring und dem Anschlag verbunden ist.

Als Federelement kann eine Tellerfeder oder ein Paket aus mehreren Tellerfedern dienen. Es kann aber an dieser Stelle auch eine Schraubendruckfeder oder jedes andere in seiner Kennlinie geeignete Federelement verwendet werden. Die kraftschlüssige Verbindung zwischen dem Federelement und dem Preßring einerseits und dem Anschlag andererseits kann durch ein direktes Anliegen des Federelementes an diesen Teilen bewirkt werden. Es können aber auch andere Bauteile, beispielsweise Übertragungsglieder, dazwischengeschaltet sein.

Die Erfindung ist vorzugsweise anwendbar zur Abdichtung des Ventilkegels an Ventilen mit Druckausgleich, bei denen der Raum hinter dem Kolben durch den Ventilkegel hindurch mit dem Raum vor dem Kolben verbunden ist, wobei diese beiden Räume in der Schließstellung des Ventils gegen den in der Zylindermantelfläche angeordneten Ein- bzw. Auslaß abgedichtet sein sollen. Dabei kann entweder der Raum hinter dem Kolben bzw. vor dem Kolben oder ein mit dem Ein- bzw. Auslaß verbundener Raum unter Überdruck stehen.

Mit der erfindungsgemäßen Abdichtungseinrichtung wird in einfacher Weise erreicht, daß während der Schließ- und Öffnungsbewegung des Kolbens kein oder nur ein geringer Preßdruck auf die Ringdichtung ausgeübt wird, so daß eine reibungsarme Bewegung des Kolbens möglich ist, während in der die Schließstellung kennzeichnenden Endstellung des Kolbens die Ringdichtung fest an die Zylinderwand angedrückt wird, so daß eine zuverlässige Abdichtung entsteht.

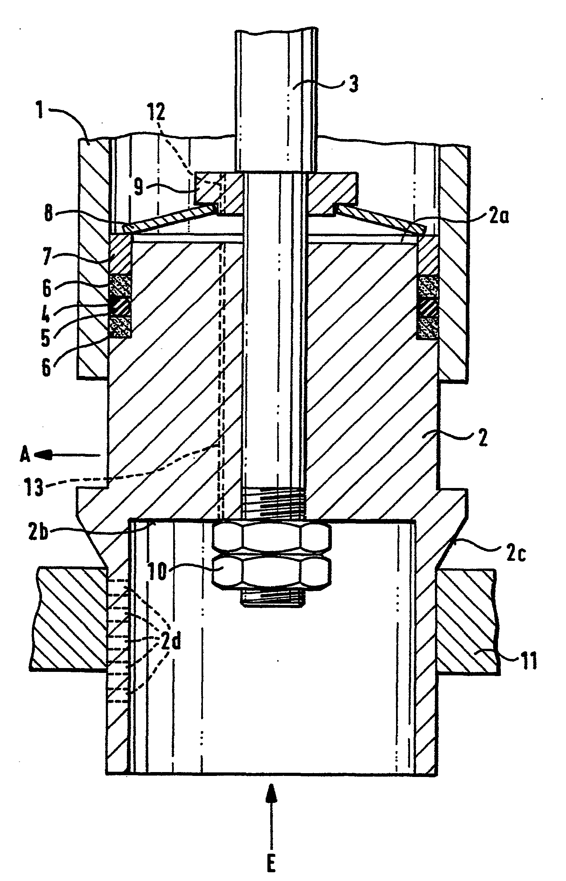

Im folgenden wird anhand der beigefügten Zeichnung ein Ausführungsbeispiel für die erfindungsgemäße Abdichtungseinrichtung näher erläutert.

In der Zeichnung sind die Teile eines Regelventils vereinfacht im Schnitt dargestellt, die für die Abdichtungseinrichtung von Bedeutung sind.

In einem Zylinder 1 ist ein Kolben 2 geführt, der an seinem in der Zeichnung unteren Ende als Lochkäfig mit angedeuteten Durchtrittslöchern 2d versehen sein kann und an seiner Außenseite einen den Ventilkegel 2c bildenden Ansatz aufweist, der dem Ventilsitz 11 gegenüberliegt.

Die Bewegung des Kolbens 2 erfolgt über eine Kolbenstange 3.

In der Zeichnung ist der Kolben in einer Stellung dargestellt, in der er soeben seine untere Endstellung erreicht hat, in welcher der Ventilkegel 2c auf dem Ventilsitz 11 aufsitzt. Durch Bewegung nach oben öffnet das Ventil, so daß ein nicht dargestellter Einlaß E in zunehmendem Maße über die Löcher 2d mit dem in der Mantelfläche des Zylinders 1 angeordneten Auslaß A in Verbindung kommt.

Der Raum hinter dem Kolben 2, also in der Zeichnung oberhalb der oberen Stirnfläche 2a des Kolbens 2, ist über einen angedeuteten Durchtrittskanal 13 mit dem Raum vor dem Kolben 2 und damit mit dem Einlaß E verbunden, so daß ein Druckausgleich zwischen diesen beiden Räumen stattfindet.

Zur Abdichtung des Raumes oberhalb des Kolbens 2 gegenüber dem Auslaß A dient eine Abdichtungseinrichtung mit einer Ringdichtung 5, die in einer Ringnut 4 angeordnet ist, welche in der Mantelfläche des Kolbens 2 am oberen Ende sich zur oberen Stirnfläche 2a hin öffnend angeordnet ist. Die Ringdichtung besteht aus einem Dichtungsring 5 aus elastischem Material, der zwischen Führungselementen 6 angeordnet ist. Bei einer vorteilhaften Ausführungsform kann der Dichtungsring 5 als Graphit-Packung ausgebildet sein, während die Führungselemente 6 aus Elektrolyt-Kohle bestehen.

Oberhalb der Ringdichtung 5, 6 ist in der Ringnut 4 ein Preßring 7 verschiebbar angeordnet, der so bemessen ist, daß er die obere Stirnfläche 2a des Kolbens 2 etwas überragt. Auf die Oberseite des Preßrings 7 ist eine kegelstumpfförmige Tellerfeder 8 so aufgesetzt, daß sie mit ihren unteren äußeren Randpartien auf dem Preßring 7 aufliegt.

Die Kolbenstange 3 ist an ihrem unteren Ende verschiebbar durch eine Bohrung des Kolbens 2 geführt und besitzt in einem vorgegebenen geringen Abstand vor der oberen Stirnfläche 2a einen tellerförmigen festen Anschlag 9, an dem sich der obere innere Rand der Tellerfeder 8 abstützt. Im Anschlag 9 ist ein angedeuteter Durchtrittskanal 12 parallel zur Achse der Kolbenstange 3 angeordnet, der mit dem Durchtrittskanal 13 im Kolben 2 fluchtet.

Am unteren, vor der unteren Stirnfläche 2b des Kolbens 2 liegenden Ende der Kolbenstange 3 ist ein weiterer als Schraubenmutter ausgebildeter Anschlag 10 angeordnet.

In der in der Zeichnung dargestellten Stellung des Kolbens 2 und allen Zwischenstellungen, in denen der Kolben höher steht und somit das Ventil ganz oder teilweise geöffnet ist, ist die Tellerfeder 8 nicht oder nur wenig vorgespannt, so daß über dem Preßring 7 nur ein geringer Druck in axialer Richtung auf die Ringdichtung 5 ausgeübt wird. Damit ist der Anpreßdruck der Ringdichtung 5 an die Innenwand des Zylinders 1 verhältnismäßig gering und der Kolben kann, ohne daß stärkere Reibungskräfte auftreten, im Zylinder 1 bewegt werden. Die Abdichtung zwischen dem oberhalb des Kolbens 2 liegenden Zylinderinnenraum und dem Auslaß A ist in diesen Stellungen jedenfalls unter dem erreichbaren Maximalwert.

Wenn in der Zeichnung dargestellten Endstellung des Kolbens 2, also der Schließstellung des Ventils, die Kolbenstange 3 weiter nach unten bewegt wird, wird durch den Anschlag 9 die Tellerfeder 8 zusammengedrückt bis zum Blockieren der Feder und dem Aufsitzen des Anschlags 9 auf der oberen Stirnwand 2a. Dadurch steigt die auf die Oberseite des Preßrings 7 ausgeübte Kraft stark an und die Ringdichtung 5 wird zusammengepreßt und damit auch in radialer Richtung dichtend an die Innenwand des Zylinders 1 angedrückt, so daß nach Beendigung dieses geringen Zusatzhubs der Kolbenstange 3 die endgültige und gute Abdichtung zwischen dem Raum oberhalb des Kolbens 2 und im Auslaß A erreicht ist.

Beim Öffnen des Ventils wird beim ersten Anheben der Kolbenstange 3 zunächst nur die Tellerfeder 8 entlastet und damit der Anpreßdruck auf die Ringdichtung 5 verringert. Wenn der zweite Anschlag 10 auf die untere Stirnfläche 2b des Kolbens 2 auftrifft und die Kolbenstange 3 weiter nach oben bewegt wird, öffnet das Ventil.

## Patentansprüche

1. Abdichtungseinrichtung an einer Kolben-Zylinderanordnung zur Abdichtung des hinter dem Kolben (2) liegenden Zylinderinnenraums gegen einen in der Mantelfläche des Zylinders angeordneten Ein- bzw. Auslaß (A), mit einer im Bereich des hinteren Endes des Kolbens (2) in dessen Mantelfläche angeordneten Ringdichtung (5) aus elastischem Material, die in einer sich zur hinteren Stirnfläche (2a) des Kolbens (2) hin öffnenden Ringnut (4) der Mantelfläche angeordnet ist, wobei über der Ringdichtung (5) in der Ringnut (4) ein die hintere Stirnfläche (2a) des Kolbens (2) überragender Preßring (7) verschiebbar geführt ist, dadurch gekennzeichnet, daß an der verschiebbar im Kolben (2) geführten Kolbenstange (3) in vorgegebenem Abstand hinter der hinteren Stirnfläche (2a) ein Anschlag (9) fest angeordnet ist, wobei zwischen dem Preßring (7) und dem Anschlag (9) ein Federelement (8) angeordnet ist, das kraftschlüssig mit dem Preßring (7) und dem Anschlag (9) verbunden ist.

2. Abdichtungseinrichtung nach Anspruch 1, dadurch gekennzeichnet, daß als Federelement eine Tellerfeder (8) dient, die mit ihrem äußeren Rand auf dem Preßring (7) aufliegt, während ihr innerer Rand mit dem Anschlag (9) verbunden ist.

3. Abdichtungseinrichtung nach Anspruch 1 oder 2, dadurch gekennzeichnet, daß die Kolbenstange (3) durch den Kolben (2) hindurchgeführt ist und an ihrem aus der vorderen Stirnfläche (2b) des Kolbens (2) austretenden Ende ein zweiter Anschlag (10) fest angeordnet ist.

4. Abdichtungseinrichtung nach einem der Ansprüche 2 oder 3 an einem Ventil, dadurch gekennzeichnet, daß die Kennlinie der Tellerfeder (8) in Abhängigkeit von den auftretenden Schließkräften so ausgewählt ist, daß das Blockieren der Tellerfeder erst in der Endstellung des Kolbens (2) erfolgt.

5. Abdichtungseinrichtung nach einem der Ansprüche 1 bis 4 an einem Ventil mit Druckausgleich, dadurch gekennzeichnet, daß der vor der hinteren Stirnfläche des Kolbens (2) angeordnete Anschlag als Teller (9) ausgebildet ist und einen parallel zur Tellerachse verlaufenden ersten Durchtrittskanal (12) aufweist, der fluchtend zu einem den Kolben (2) durchsetzenden zweiten Durchtrittskanal (13) angeordnet ist.

## Claims

1. Sealing device on a piston-cylinder arrangement for sealing the inside space of the cylinder situated behind the piston (2) against an inlet and outlet (A) arranged in the jacket surface of the cylinder, having an annular seal (5) made of elastic material, arranged in the region of the rear end of the piston (2) in the jacket surface of the latter, which annular seal (5) is arranged in an annular groove (4) of the jacket surface, which annular groove (4) opens out towards the rear end face (2a) of the piston (2), a pressing ring (7) protruding over the rear end face (2a) of the piston (2) being guided displaceably in the annular groove (4) above the annular seal (5), characterised in that a stop (9) is arranged fixedly on the piston rod (3) guided displaceably in the piston (2) at a specified distance behind the rear end face (2a), a spring element (8) being arranged between the pressing ring (7) and the stop (9), which spring element (8) is tensionally connected to the pressing ring (7) and the stop (9).

2. Sealing device according to Claim 1, characterised in that a disk spring (8) serves as spring element which bears against the pressing ring (7) with its outer edge while its inner edge is connected to the stop (9).

3. Sealing device according to Claim 1 or 2, characterised in that the piston rod (3) is guided through the piston (2) and a second stop (10) is arranged fixedly at its end emerging from the front end face (2b) of the piston (2).

4. Sealing device according to one of Claims 2 or 3 on a valve, characterised in that the characteristic of the disk spring (8) in dependence on the closing forces arising is selected in such a way that the blocking of the disk spring only takes place in the final position of the piston (2).

5. Sealing device according to one of Claims 1 to 4 on a valve with pressure compensation, characterised in that the stop arranged before the rear end face of the piston (2) is constructed as a disk (9) and has a first passage channel (12) extending parallel to the disk axis, which passage channel (12) is arranged flush with a second passage channel (13) penetrating the piston (2).

**Revendications**

1. Dispositif d'étanchéité monté sur un ensemble piston-cylindre pour réaliser l'étanchéité de la chambre interne du cylindre disposée derrière le piston (2) à l'égard d'une admission ou d'un échappement (A) disposés dans l'enveloppe du cylindre, comportant une bague d'étanchéité (5) en matière élastique disposée dans l'enveloppe du piston (2), cette bague (5) étant placée dans une rainure annulaire (4) pratiquée dans l'enveloppe et s'ouvrant en direction de la surface frontale arrière (2a) du piston (2), une bague de compression (7) étant placée de manière mobile au-dessus de la bague d'étanchéité (5) à l'intérieur de la rainure (4), cette bague (7) faisant saillie de la surface frontale arrière (2a) du piston (2), caractérisé par le fait que sur la tige de piston (3) mobile à l'intérieur du piston (2), à une distance prédéterminée derrière la face frontale arrière (2a) est disposée de manière fixe une butée (9), entre la bague de compression (7) et la butée (9) étant disposé un élément élastique (8) qui est relié de manière solidaire à ladite bague de compression (7) et ladite butée (9).

2. Dispositif d'étanchéité selon la revendication 1, caractérisé par le fait qu'un ressort Belleville (8) sert d'élément élastique et s'applique par son bord extérieur sur la bague de compression (7), tandis que son bord intérieur est relié à la butée (9).

3. Dispositif d'étanchéité selon la revendication 1 ou 2, caractérisé par le fait que la tige de piston (3) passe à travers le piston (2) et que, sur son extrémité sortant de la surface frontale avant (2b) du piston (2) est disposée de manière fixe une deuxième butée (10).

4. Dispositif d'étanchéité selon l'une des revendications 2 ou 3 sur une soupape, caractérisé par le fait que la courbe caractéristique du ressort Belleville (8) est sélectionnée en fonction des forces de fermeture qui se produisent de telle sorte que le blocage du ressort Belleville ne s'effectue qu'en position finale du piston (2).

5. Dispositif d'étanchéité selon l'une des revendications 1 à 4 sur une soupape à compensation de pression, caractérisé par le fait que la butée disposée avant la face frontale arrière du piston (2) est réalisée en forme de disque (9) et présente, s'étendant parallèlement à l'axe du disque, un premier canal de passage (12) qui est disposé en alignement avec un deuxième canal de passage (13) passant à travers le piston (2).